Europäisches Patentamt

European Patent Office

Office européen des brevets

(19)

(11) Numéro de publication : **0 309 506 B1**

(12) **FASCICULE DE BREVET EUROPEEN**

(45) Date de publication du fascicule du brevet :
**29.01.92 Bulletin 92/05**

(51) Int. Cl.$^5$ : **C04B 11/032**

(21) Numéro de dépôt : **88902767.8**

(22) Date de dépôt : **02.03.88**

(86) Numéro de dépôt international :
**PCT/BE88/00007**

(87) Numéro de publication internationale :
**WO 88/06573 07.09.88 Gazette 88/20**

(54) **INSTALLATION POUR LA PREPARATION DE PLATRE DE HAUTE RESISTANCE.**

Jointe à la demande no. 88870030.9/0286618
(numéro de dépôt/numéro de publication de la
demande européenne) par décision du
06.09.90.

(30) Priorité : **04.03.87 LU 86800**

(43) Date de publication de la demande :
**05.04.89 Bulletin 89/14**

(45) Mention de la délivrance du brevet :
**29.01.92 Bulletin 92/05**

(84) Etats contractants désignés :
**AT BE CH DE ES FR GB GR IT LI LU NL SE**

(56) Documents cités :
**EP-A- 0 074 887**
**DE-B- 1 072 867**

(56) Documents cités :
**FR-A- 431 234**
**FR-A- 491 174**
**FR-A- 595 664**
**FR-A- 944 968**
**FR-A- 2 009 799**
**GB-A- 708 409**
**GB-A- 811 246**
**US-A- 1 568 791**

(73) Titulaire : **Janssens, Luc**
**Berkenlaan 19**
**B-2610 Wilrijk-Antwerpen (BE)**

(72) Inventeur : **Janssens, Luc**
**Berkenlaan 19**
**B-2610 Wilrijk-Antwerpen (BE)**

(74) Mandataire : **Van Malderen, Michel et al**
**p.a. Freylinger & Associés 22 avenue J.S.**
**Bach (bte 43)**
**B-1080 Bruxelles (BE)**

EP 0 309 506 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention est relative à une installation pour la préparation de plâtre à haute résistance à partir de sulfate de calcium naturel (gypse) ou de synthèse (sulfogypse, phosphogypse et autres sous-produits de synthèse).

On sait actuellement préparer des plâtres de haute résistance (désignés par "plâtres $\alpha$", du fait qu'ils sont essentiellement constitués par des semihydrates ou anhydrites de variété $\alpha$ ) qui, une fois durcis, présentent des caractéristiques mécaniques beaucoup plus élevées que celles des plâtres courants (désignés par "plâtres $\beta$ " car essentiellement composés de la variété $\beta$ ). Ainsi la résistance en compression des plâtres $\alpha$ peut varier entre 300 et 600 bars et leur résistance en flexion entre 80 et 160 bars, alors, que, pour les plâtres $\beta$ , ces résistances varient respectivement entre 50 et 100 bars et entre 10 et 20 bars.

Le document GB-A-311 276 décrit un procédé de séchage du plâtre où la matière à traiter est transportée par convoyeurs à vis disposés en plusieurs étages.

Le document FR-A-431 234 décrit un appareil pour le transport et le séchage de matières quelconques, comportant plusieurs étages de lames pouvant basculer et décharger la matière d'un brin à l'autre par retournement de celles-ci.

Le document EP-A- 00 74 887 décrit un procédé et un four pour la préparation d'un plâtre. Le four est constitué d'une série d'étages, chaque étage comprenant des plateaux contenant le mélange à traiter qui se déplacent d'un étage à l'autre et des moyens de chauffage.

Le document FR-A-491 174 décrit également une installation de séchage de matière comprenant des organes de transport sans fin garnis de moyens de support qui s'articulent auxdits organes de transport de manière à pouvoir basculer; ces cadres étant conduits à travers une étuve.

Aucun de ces dispositifs ne peut être utilisé pour la préparation d'un plâtre de haute résistance. En effet, le brassage n'est en aucun cas suffisamment intense et le traitement des matières dans les dispositifs décrits ne pourra pas être suffisamment homogène.

Par le document FR-A-84 17 162, on connaît une installation de production de plâtre $\alpha$ dans laquelle des plateaux sont montés sur un axe central et la matière, c'est-à-dire du sulfate de calcium sous forme de poudre, est déplacée par une grille pour tomber de plateau en plateau à travers une ouverture pratiquée dans chaque plateau. Il en résulte que la matière soumise aux traitements thermiques nécessaires classiques subit un mouvement; ce qui améliore le rendement du procédé et/ou la qualité du produit obtenu. Toutefois, cette installation présente l'inconvénient qui consiste en ce qu'il est difficile d'y effectuer les traitements thermiques aux températures voulues. Par ailleurs, l'installation ne donne pas entière satisfaction en ce qui concerne la rentabilité du procédé et la qualité du produit obtenu.

Le but de la présente invention consiste à fournir une installation de fabrication de plâtre de haute résistance, présentant une construction simple, peu encombrante, sans comporter les inconvénients de l'installation connue.Un autre but de la présente invention consiste à fournir des unités mobiles pour la fabrication de plâtre de haute résistance. Un autre but de la présente invention est de fournir une installation qui permet la fabrication d'un plâtre de haute résistance tel que le plâtre $\alpha$ selon un procédé continu, à partir d gypse naturel ou de sous-produits ou résidus de synthèse

Selon la présente invention, l'installation comporte au moins un transporteur à chaînes sans fin équipé de palettes basculables qui est dévié sur des pignons de renvoi de manière à former au moins un brin supérieur et un brin inférieur, une trémie d'alimentation en matière de départ disposée au-dessus du premier brin supérieur et un dispositif de chauffage dont les gaz chauds sont propulsés dans des chambres disposées entre chaque fois un brin supérieur et un brin inférieur.

Le nombre de renvoi du transporteur à chaînes dépend de la longueur du trajet linéaire et de la capacité de traitement recherchée.

Selon une première forme d'exécution, l'installation conforme à l'invention comporte trois étages de renvoi du transporteur à chaînes, c'est-à-dire six brins supérieurs et inférieurs. Elle peut toutefois aussi en comporter encore plus, selon les exigences posées.

L'installation comporte encore, en aval du transporteur à chaînes sans fin, au moins un étage comportant au moins une auge équipée d'une vis de transport, les gaz chauds circulant dans lesdites auges.

De préférence, l'installation conforme à la présente invention comporte plusieurs étages d'auges et chaque étage comporte plusieurs auges essentiellement parallèles.

Conformément à la présente invention, les palettes basculables sont maintenues en position essentiellement horizontale le long du parcours d'un brin supérieur ou inférieur du transporteur à chaînes et basculent en fin de parcours en vue de décharger la matière transportée respectivement sur les palettes du brin inférieur ou supérieur suivant, dans la ou les auges montées en aval ou éventuellement à travers l'ouverture de déchargement, à la sortie de l'installation. Il en résulte que la matière subit, au cours de son traitement au moins un renversement et brassage; ce qui permet d'améliorer l'homogénéité du produit obtenu.

Une vis de transport est agencée de manière à pouvoir tourner dans une auge et y transporter et remuer la matière avant de la déverser dans un étage d'auge(s) inférieure ou au travers d'une ouverture de déchargement.

Dans la mesure où l'installation comporte plusieurs étages d'auges, il est prévu que la matière se déplace dans un sens dans un premier étage et dans le sens opposé, dans l'étage suivant. Pour ce faire, on peut prévoir que la ou les vis du premier étage tourne(nt) dans un sens et que la ou les vis de l'étage suivant tourne(nt) dans le sens opposé ou, de préférence, que toutes les vis tournent dans le même sens, la vis du premier étage comportant un pas de vis inverse de celle du deuxième étage.

En variante, il est prévu que, dans un même étage, la matière passe d'une auge à l'autre pour être transportée selon un mouvement de va-et-vient, avant d'être déchargée dans l'étage suivant ou au travers de l'ouverture de déchargement.

Selon une forme d'exécution particulièrement préférée de l'invention, la vis de transport comporte un noyau sur lequel s'étend une saillie hélicoïdale qui est surmontée d'une partie d'hélice redressée essentiellement perpendiculaire à l'axe de manière telle qu'elle comporte un contour coudé. Il en résulte essentiellement que la matière subit un brassage; en effet, dans la zone proche de l'axe, la matière est entraînée et comprimée alors que, dans la zone périphérique, elle peut se détendre et même subir un certain mouvement de retour en annexe, c'est-à-dire inverse au sens du transport. Ce brassage de la matière facilite et améliore l'action de la vapeur.

Avantageusement, le transporteur à chaînes ou les vis se déplacent dans une chambre fermée comportant une ouverture d'admission du transporteur à chaînes et de la matière de départ, un ou plusieurs étages d'auges ainsi qu'une ouverture de sortie. Ladite chambre fermée est avantageusement équipée de vannes de surpression qui permettent de régler la pression à l'intérieur de ladite chambre.

De préférence, en vue de réduire la tension dans le transporteur à chaînes, une partie au moins des pignons de renvoi est équipée d'un moyen d'entraînement tel qu'un pignon extérieur sur lequel agit un couple d'entraînement.

L'installation selon la présente invention est avantageusement montée dans un caisson comportant une fenêtre qui permet de vérifier l'état des palettes qui sont recyclées, par exemple.

Par rapport à l'état de la technique susmentionné, l'avantage de l'installation conforme à la présente invention consiste en ce qu'il n'y a pas de raclage de la matière et que la matière est mieux brassée et rendue plus homogène par le renversement des palettes et le remous dû aux vis dans les auges.

D'autres détails apparaîtront plus clairement à la lecture de la description d'une forme d'exécution préférée donnée à l'appui des figures annexées dans lesquelles :

  – la figure 1 est une vue schématique latérale de l'installation conforme à la présente invention;
  – la figure 2 est une vue schématique à plus grande échelle d'un pignon de renvoi du transporteur à chaînes;
  – la figure 3 est une vue schématique latérale de l'installation selon une variante;
  – les figures 4A et 4B représente, respectivement, une vue de face et une vue latérale d'une partie de vis conforme à l'invention;
  – la figure 5 est une vue en perspective d'une partie de vis conforme à l'invention.

En référence aux figures, des repères de référence identiques se rapportent à des éléments identiques ou analogues.

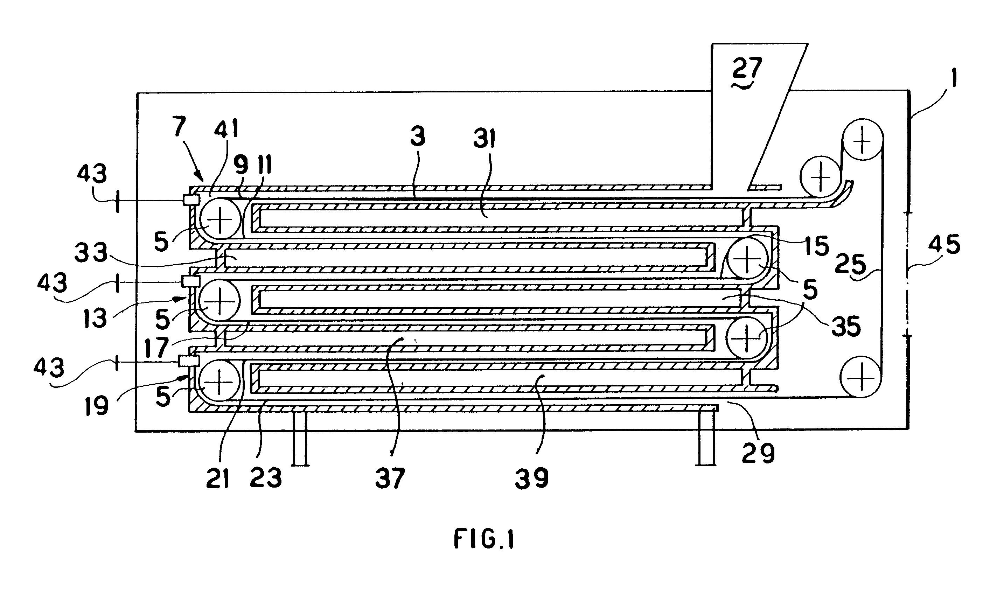

A la figure 1, on a représenté une installation pour la fabrication de plâtre α à partir de gypse ou de sulfate de calcium de synthèse, comportant dans un caisson 1 un transporteur à chaînes sans fin 3 équipé de palettes basculables, qui est dévié sur des pignons de renvoi 5 de manière à former trois étages 7, 13, 19 comportant chacun un brin supérieur 9, 15, 2 et un brin inférieur 11, 17, 23 avant d'être recyclé en 25. L'installation est équipée d'une trémie d'alimentation 27 et d'une ouverture de décharge 29. L'installation comporte également un dispositif de chauffage (non représenté) tel qu'un brûleur à gaz dont les fumées chaudes sont propulsées dans des chambres 31 à 39 disposées entre chaque fois un brin supérieur et un brin inférieur. Avantageusement, les fumées circulent du bas vers le haut, tandis que la matière est transportée du haut vers le bas.

Il est bien évident que l'installation réprésentée à la figure I est donnée à titre d'exemple non limitatif et qu'une installation conforme à la présente invention peut comporter, selon les besoins, plus de trois étages, par exemple 10 étages.

Selon la présente invention, le transporteur à chaînes circule dans une chambre continue 41 qui peut être équipée de vannes 43 pour le réglage de la pression.

Avantageusement, le caisson 1 est pourvu d'une fenêtre 45 qui permet de vérifier l'état du transporteur à chaînes et des palettes transportables, notamment dans le parcours de recyclage 25.

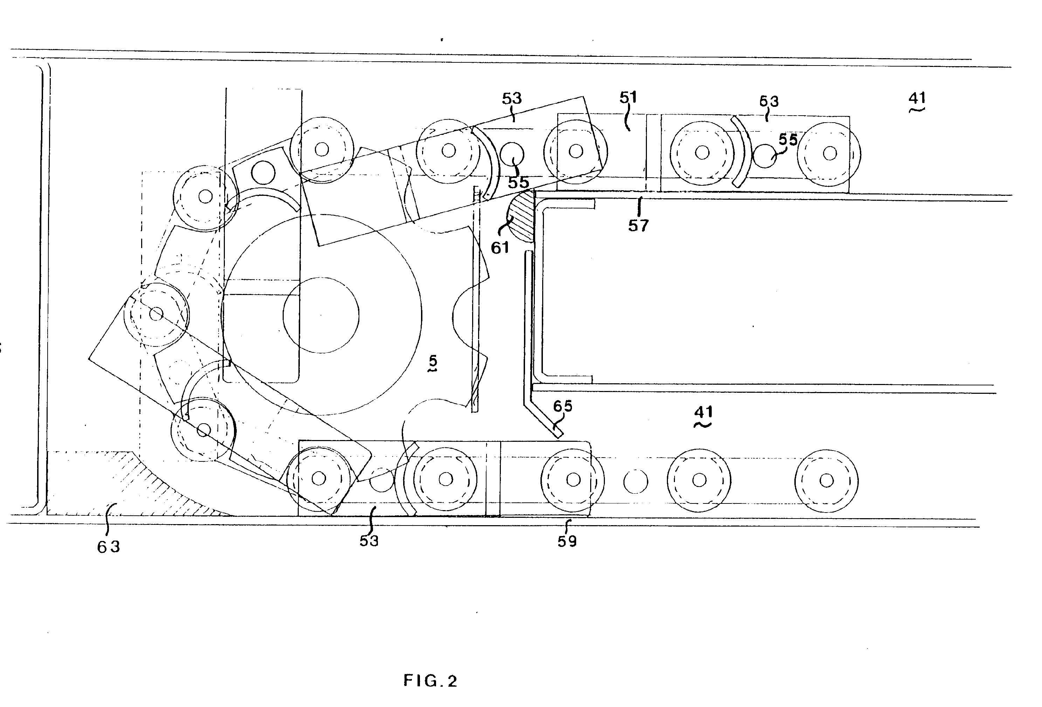

La figure 2 montre plus en détail un pignon de renvoi 5 et l'agencement du transporteur à chaînes. Ledit transporteur à chaînes se compose de deux chaînes à joues parallèles entre lesquelles sont logées des palettes basculables 53 sur un axe de basculement 55 solidaire de deux chaînes à joues 51. Le long du parcours d'un brin supérieur ou inférieur, lesdites palettes 53 sont maintenues en une position essentiellement horizontale grâce à des guides constitués par les parois inférieures 57, 59 de la chambre continue 41. En bout de parcours, les palettes 53 sont libérées et peuvent basculer la matière sur le brin situé en dessous d'elles.

La matière de départ alimentée par la trémie subit ainsi, au cours de son traitement, plusieurs renversements.

Le mouvement de basculement des palettes 53 est avantageusement guidé par des butées 61 et 63 qui empêchent que lesdites palettes ne heurtent les parois de chambre trop brusquement et entraînent de ce fait une usure prématurée de l'installation.

Avantageusement, la chambre continue 41 est équipée de racles 65 d'égalisation de la matière, notamment en aval d'un renversement, de telle sorte que la matière soit répartie sur les palettes et ne forme substantiellement pas d'agglomérats.

Selon une forme d'exécution préférée, les pignons de renvoi 5 sont pourvus d'un moyen d'entraînement (non représenté) tel que par exemple un pignon supplémentaire, monté à l'extérieur de la chambre 41 sur le même axe que celui du pignon 5, et sur lequel agit un couple d'entraînement. Il est bien évident que le passage dudit axe à travers les parois latérales de la chambre continue 41 se fait de manière étanche.

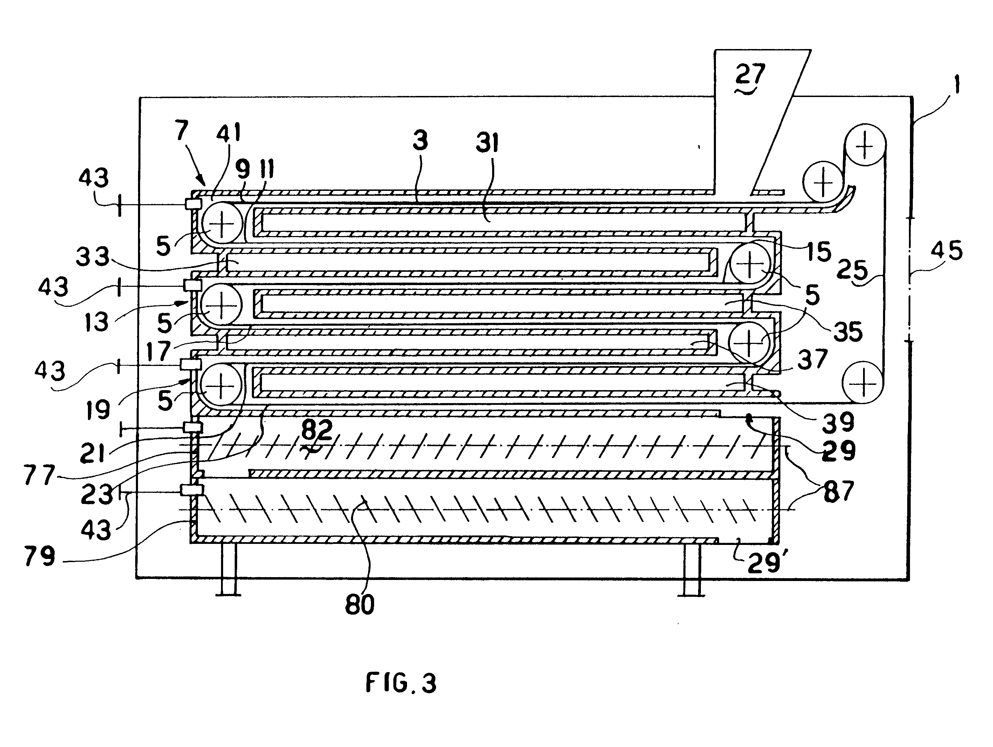

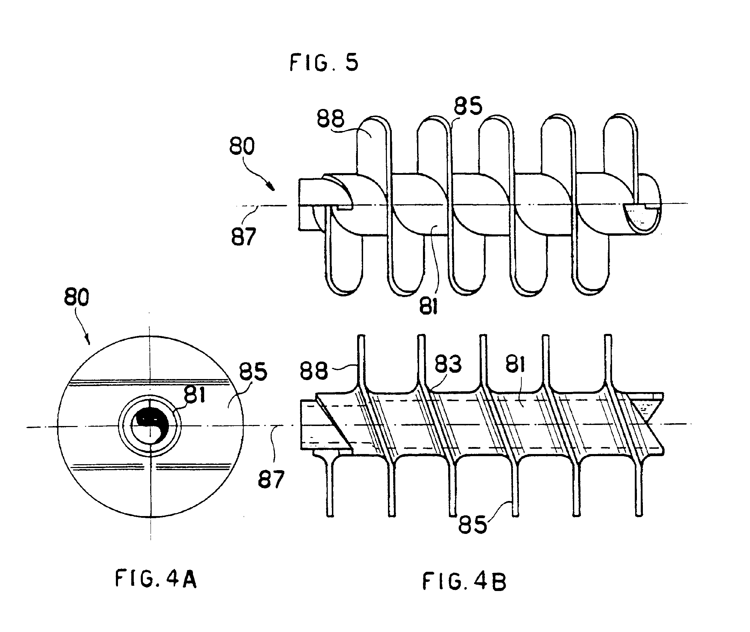

Selon une variante d'exécution (figure 3), l'installation de la figure 1 est suivie de plusieurs étages (77, 79) comportant chacun plusieurs auges dans lesquelles tournent des vis de transport 80 telles que représentées dans les figures 4 et 5. Dans ce cas, la matière déversée à travers l'ouverture de déchargement 29 tombe dans des auges et est emportée par des vis de transport 80.

Les vis de transport se composent de plusieurs éléments 80 assemblés de manière connue en soi. A l'extrémité opposée à l'alimentation, la matière est déchargée dans une auge inférieure 79 qui transporte la matière en sens inverse pour la déverser dans un étage inférieur supplémentaire ou au travers d'une ouverture de déchargement 29' de la matière traitée.

Avantageusement, les vis tournent toutes dans le même sens, la vis du premier étage 77 comportant un pas inverse de celle de l'étage suivant 79.

La vis comporte un noyau 81 sur lequel s'étend une saillie hélicoïdale 83 surmontée d'une partie d'hélice redressée 85 essentiellement perpendiculaire à l'axe 87. Celle-ci est redressée de telle sorte qu'elle présente un coude 88. Ceci a pour effet que, dans la zone proche de l'axe, la matière est entraînée et subit, de ce fait, une compression et que, dans la zone périphérique, elle subit une certaine détente lui permettant de retomber, en maintenant un brassage intense. Il en résulte que les gaz chauds circulant dans les auges entrent en contact avec la matière toute entière et qu'on obtient une matière homogène de qualité élevée.

Sous une forme complémentaire, l'invention porte sur un procédé de traitement de la matière de départ afin d'obtenir un plâtre présentant de meilleures caractéristiques. Ce procédé est rendu possible par le recours à l'installation décrite ci-dessus.

Selon ce procédé, la matière de départ est concassée sous forme de poudre et est humidifiée à la température ambiante jusqu'à présenter une teneur en eau de l'ordre de 15 à 30 % d'eau exprimée par rapport à son poids de départ, et de préférence de l'ordre de 15 à 20 %.

La matière ainsi humidifiée est introduite dans l'installation dans une chambre de traitement qui elle-même est surchauffée à une température de l'ordre de 500 à 600°C.

Dans cette chambre de traitement, une production importante de vapeur se produit par ébullition de l'eau contenue dans la matière en poudre. Simultanément à l'action de cette vapeur, dans ladite chambre, un mouvement d'entraînement de la matière à l'aide de palettes se produit.

Cette action à l'état d'ébullition se poursuit après un premier démarrage dans ladite chambre de traitement par un brassage ultérieur permanent de la matière en poudre (à l'aide des vis de brassage), tandis que la température est progressivement décroissante.

A mesure que la matière poursuit sa route dans ladite installation, le traitement se répète et se poursuit. L'hydratation de la matière de départ, couplée à l'action d'entraînement et de brassage, a pour conséquence que finalement la matière est soumise progressivement à l'action de la vapeur sèche.

Finalement, la matière recueillie à la sortie de l'installation est pratiquement une poudre sèche, dépourvue de vapeur d'eau mais dont les propriétés physiques ont été sensiblement modifiées.

Ceci est en particulier rendu possible par la forme particulière de la vis qui a été décrite qui permet in situ et dans la masse de la matière, la formation de vapeur d'eau en ébullition. La forme particulière de la vis permet de soumettre successivement la matière traitée à une action de poussée et d'entraînement, et à une décompression au cours de son parcours ce qui, en plus du brassage, permet une action directe de la vapeur d'eau, au sein de la matière.

La vapeur qui peut ainsi mieux s'évacuer permet de traiter sur son passage de manière plus intime les particules de matière.

Dans le cas d'une vis dont le pas serait par exemple de 50 mm et la longueur de 3 mètres, la matière serait ainsi pratiquement soumise 60 fois à une action de ce type, consistant en une poussée/entraînement suivi d'une décompression. Dans le cas où une telle action est encore répétée sur chacun des quinze étages d'une installation, on obtient des résultats particulièrement remarquables. Le principe consiste donc à traiter de manière efficace et complète, et ceci de manière répétée, des petits volumes (et par conséquent des poids réduits) de matière de manière intime à l'aide de la vapeur d'eau, ce qui procure un rendement très supérieur.

A cet égard, le procédé de la présente invention se différencie nettement des techniques connues jusqu'à présent.

## Revendications

1. Installation pour la préparation de plâtre à haute résistance à partir de sulfate de calcium naturel (gypse) ou de synthèse, caractérisée en ce qu'elle comporte:
   - au moins un transporteur à chaînes sans fin (13) équipé de palettes basculables (53), ledit transporteur se déplaçant dans une chambre fermée, les palettes (53) étant déviées sur des pignons de renvoi (5) de manière à former au moins un brin supérieur (9, 15, 21) et un brin inférieur (11, 17, 23);
   - une trémie d'alimentation (27) en matière de départ disposée au-dessus du brin supérieur (9, 15, 21);
   - un dispositif de chauffage dont les gaz chauds sont propulsés dans des chambres intermédiaires (31, 39) disposées chaque fois entre un brin supérieur et un brin inférieur;
   - au moins un étage (77, 79) disposé en aval du transporteur à chaîne, comportant au moins une auge équipée d'une vis de transport (80), les gaz chauds circulant dans lesdites auges;
   - la vis du transporteur étant conformée de manière à présenter un noyau (81) sur lequel s'étend une saillie hélicoïdale (83) qui est surmonté d'une partie d'hélice redressée essentiellement perpendiculaire (85) à l'axe (87) de telle sorte qu'elle présente un contour coudé.

2. Installation selon la revendication 1 caractérisée en ce qu'elle comporte trois étages de renvoi (7, 13 19) du transporteur à chaînes (3).

3. Installation selon la revendication 1 ou 2 caractérisée en ce que les palettes basculables (5) sont maintenues en position essentiellement horizontale le long du parcours d'un brin supérieur ou inférieur du transporteur à chaînes (3) et basculent en fin de parcours en vue de décharger la matière transportée respectivement sur les palettes du brin inférieur ou supérieur suivant ou bien à travers l'ouverture de déchargement (29) à la sortie de l'installation.

4. Installation selon l'une quelconque des revendications précédentes caractérisée en ce que le transporteur à chaînes (3) se compose de deux chaînes à joues parallèles (51) entre lesquelles sont logées des palettes basculables (53) sur un axe de basculement (55) solidaire des deux chaînes à joues (51).

5. Installation selon l'une quelconque des revendications précédentes caractérisée en ce que les palettes (53) sont maintenues en position horizontale par des guides constitués par les parois inférieures (57, 59) de la chambre fermée et en ce que le mouvement de basculement des palettes (53) est guidé par des butées (61, 63).

6. Installation selon l'une quelconque des revendications précédentes caractérisée en ce qu'elle est équipée de racles (65) d'égalisation de la matière sur le transporteur à chaînes.

7. Installation selon l'une quelconque des revendications précédentes caractérisée en ce que la ou les vis du premier étage d'auge tourne(nt) dans un sens et la ou les vis de l'étage suivant tourne(nt) dans le sens opposé.

8. Installation selon l'une quelconque des revendications 1 à 6 caractérisée en ce que la ou les vis du premier étage d'auge(s) présente(nt) un pas de vis inverse de celui de la ou des vis d'un étage suivant, les vis tournant dans le même sens de rotation.

9. Installation selon l'une quelconque des revendications précédentes caractérisée en ce que le transporteur à chaînes (3) et éventuellement les vis (80) se déplacent dans une chambre fermée comportant une ouverture d'admission du transporteur à chaînes et de la matière et éventuellement des vis (80) ainsi qu'une ouverture de sortie (29, 29'), en ce que ladite chambre fermée est équipée de vannes de surpression (43).

10. Installation selon l'une quelconque des revendications précédentes caractérisée en ce qu'elle est montée dans un caisson (1) comportant une fenêtre (45) qui permet de vérifier l'état des palettes qui sont recyclées (25).

11. Procédé de traitement d'une matière de départ constituée de sulfate de calcium afin d'obtenir un plâtre de haute résistance en ayant recours aux installations selon l'une quelconque des revendications 1 à 10, caractérisé en ce que:
   - ladite matière de départ est concassée sous forme de poudre et est humidifiée à la température ambiante jusqu'à présenter une teneur en eau de 15 à 30% et de préférence de l'ordre de 15 à 20% exprimée par rapport à son poids de départ,
   - la matière ainsi humidifiée est introduite dans l'installation dans une chambre de traitement qui elle-même est surchauffée à une température de l'ordre de 500 à 600°C de manière à ce que, dans cette chambre de traitement, une production importante de vapeur se produise par ébullition de l'eau contenue dans la poudre avec, simultanément à l'action de cette vapeur, dans ladite chambre, un mouvement d'entraînement et de brassage de la matière à l'aide des palettes,
   - cette action à l'état d'ébullition se produit après un premier démarrage de ladite chambre de traitement par un brassage ultérieur permanent et continu de la matière en poudre, tandis que la température est progressivement décroissante,
   - le brassage ultérieur continu et permanent est couplé à une action de poussée et d'entraînement et à une décompression de la matière à traiter ce qui, en plus du brassage, permet une action directe de la vapeur d'eau,

– la matière est ensuite soumise progressivement à l'action de la vapeur sèche et est finalement recueillie à la sortie de l'installation à l'état d'une poudre sèche.

## Claims

1. Plant for the preparation of high-strength plaster from natural calcium sulphate (gypsum) or from synthetic calcium sulphate, characterized in that it comprises

– at least one endless chain conveyor (13) equipped with tiltable paddles (3), said conveyor moving in a closed casing, the paddles (5) being diverted on return pinions (5) so as to form at least one upper strand (9, 15, 21) and one lower strand (11, 17, 23);

– a feed hopper (27) for the starting material, arranged above the first upper strand (9);

– a heating device whose hot gases are propelled into intermediate chambers (31 to 39), each arranged between an upper strand and a lower strand;

– downstream of the chain conveyor, at least one stage (77, 79) comprising at least one channel equipped with a conveying screw (80), with the hot gases circulating in the said channels

– said conveying screw being formed to have a core (81) on which there extends a helical projection (83) which supports a raised helical part which is essentially perpendicular (85) to the axis (87), with the result that it has a cranked outline.

2. Plant according to claim 1, characterized in that it comprises three return stages (7, 13, 19) of the chain conveyor (3).

3. Plant according to claim 1 or 2, characterized in that the tiltable paddles (5) are kept in an essentially horizontal position along the path of an upper or lower strand of the chain conveyor (3) and tilt at the end of the path in order to discharge the material being conveyed onto the paddles of the following lower or upper strand respectively, or else through the discharge opening (29), at the outlet of the plant.

4. Plant according to any one of the preceding claims, characterized in that the chain conveyor (3) is made up of two chains with parallel cheeks (51) between which there are housed paddles (53) which are tiltable on a tilting pivot (55) fastened integrally to two chains with cheeks (51).

5. Plant according to any one of the preceding claims, characterized in that the paddles (53) are kept in a horizontal position by guides consisting of the lower walls (57, 59) of the chamber and in that the tilting movement of the paddles (53) is guided by end stops (61, 63).

6. Plant according to any one of the preceding claims, characterized in that it is equipped with scraper blades.

7. Plant according to any one of the preceding claims, characterized in that the screw(s) of a first stage of channels rotates (rotate) in one direction and the screw(s) of the following stage rotates (rotate) in the opposite direction.

8. Plant according to any one of claims 1 to 6, characterized in that the screw(s) of a first stage of channel(s) has (have) a screw pitch inverse to that of the screw(s) of a following stage, the screws rotating in the same direction of rotation.

9. Plant according to any one of the preceding claims, characterized in that the chain conveyor (3) and, if desired, the screws (80) move in a closed chamber comprising an entry opening for the chain conveyor and for the material, for the screws (80) if desired, and an exit opening (29, 29') and in that the said closed chamber is equipped with overpressure valves (43).

10. Plant according to any one of the preceding claims, characterized in that it is mounted in a casing (1) comprising a window (45) which makes it possible to check the state of the paddles which are recycled (25).

11. Process for the treatment of a starting material consisting of calcium sulphate in order to obtain a high-strength plaster by resorting to the plants according to any one of claims 1 to 10, characterized in that:

– the said starting material is crushed into powder form and is moistened at ambient temperature until it has a water content of 15 to 30% and preferably of the order of 15 to 20% of water, expressed in relation to its original weight,

– the material thus moistened is introduced into the plant in a processing chamber which is itself superheated to a temperature of the order of 500 to 600°C, so that, in this processing chamber, a large quantity of steam is produced by boiling the water present in the powdered material with, simultaneously with the action of this steam, a movement of entrainment of the material by means of paddles in the said chamber, and

– this action in the boiling state is continued after a first initiation in the said processing chamber by a subsequent continuous stirring of the powdered material, while the temperature decreases progressively,

– the subsequent stirring is coupled with a pushing and entraining action and with a decompression of the material to be treated, which, in addition to the stirring, allows the steam to act directly;

– the material is progressively subjected to the action of dry steam and is finally collected at the outlet of the plant in the form of a dry powder.

**Patentansprüche**

1. Anlage zur Herstellung von Gips von hoher Festigkeit aus natürlichem Kalziumsulfat (Selenit) oder synthetischem Kalziumsulfat, **dadurch gekennzeichnet, daß** sie besteht aus :
   – mindestens einem endlosen Kettenförderer (13), der mit kippbaren Schaufeln (53) ausgerüstet ist, wobei der besagte Förderer in einer geschlossen Kammer umläuft, und die Schaufeln (53) auf Umlenkritzeln (5) so umgelenkt werden, daß mindestens ein oberer Strang (9, 15, 21) und ein unterer Strang (11, 17, 23) gebildet wird;
   – einem Trichter (27) zum Zuführen von Ausgangsmaterial, der über dem oberen Strang (9, 15, 21) angeordnet ist;
   – einer Heizvorrichtung, deren heiße Gase in Zwischenkammern (31, 39) eingeblasen werden, die jeweils zwischen einem oberen Strang und einem unteren Strang angeordnet sind;
   – mindestens einer Etage (77, 79), die stromabwärts von dem Kettenförderer angeordnet ist und mindestens einen mit einer Förderschnecke (80) ausgerüsteten und von den heißen Gasen durchströmten Trog aufweist; wobei die Schnecke des Förderers einen Kern (81) aufweist, der mit einem schraubenförmigen Vorsprung (83) versehen ist, auf dem ein aufgerichteter, im wesentlichen zu der Achse (87) senkrechter schraubenförmiger Teil (85) so angeordnet ist, daß er einen gekröpften Umriß aufweist.

2. Anlage gemäß Anspruch 1, **dadurch gekennzeichnet, daß** sie drei Umlenketagen (7, 13, 19) des Kettenförderers (3) aufweist.

3. Anlage gemäß Anspruch 1 oder 2, **dadurch gekennzeichnet, daß** die kippbaren Schaufeln (53) längs der Strecke eines oberen oder unteren Strangs des Kettenförderers (3) in einer im wesentlichen horizontalen Position gehalten werden und am Ende der Strecke gekippt werden, um das beförderte Material auf die Schaufeln des folgenden unteren oder oberen Strangs, oder in die Entladeöffnung (29) am Ausgang der Anlage zu entladen.

4. Anlage gemäß irgendeinem der vorhergehenden Ansprüche, **dadurch gekennzeichnet, daß** der Kettenförderer (3) aus zwei Ketten mit parallelen Seitenwangen (51) besteht, zwischen denen kippbare Schaufeln (53) auf einer Kippachse (55) angebracht sind, die mit den zwei mit Seitenwangen (51) versehenen Ketten fest verbunden ist.

5. Anlage gemäß irgendeinem der vorhergehenden Ansprüche, **dadurch gekennzeichnet, daß** die Schaufeln (53) durch Führungen, die von den unteren Wänden (57, 59) der geschlossenen Kammer gebildet werden, in der horizontalen Position gehalten werden, **und daß** die Kippbewegung der Schaufeln (53) durch Anschläge (61, 63) geführt wird.

6. Anlage gemäß irgendeinem der vorhergehenden Ansprüche, **dadurch gekennzeichnet, daß** sie mit Rakeln (65) zum Planieren des Materials auf dem Kettenförderer ausgerüstet ist.

7. Anlage gemäß irgendeinem der vorhergehenden Ansprüche, **dadurch gekennzeichnet, daß** die Schnecke(n) der ersten Trogetage sich in der einen Richtung dreht (drehen), und die Schnecken(n) der folgenden Etage sich in der entgegengesetzten Richtung dreht (drehen).

8. Anlage gemäß irgendeinem der Ansprüche 1 bis 6, **dadurch gekennzeichnet, daß** die Schnecke(n) der ersten Trogetage einen bezüglich der Schnecke(n) einer folgenden Etage umgekehrten Gewindegang aufweist (aufweisen), wobei sich die Schnecken in der gleichen Richtung drehen.

9. Anlage gemäß irgendeinem der vorhergehenden Ansprüche, **dadurch gekennzeichnet, daß** der Kettenförderer (3) und eventuell die Schnecken (80) in einer geschlossenen Kammer angeordnet sind, die eine Einführungsöffnung für den Kettenförderer und das Material und eventuell die Schnecken (80), sowie eine Ausgangsöffnung (29, 29′) aufweist, **und daß** die besagte geschlossene Kammer mit Überdruckventilen (43) ausgerüstet ist.

10. Anlage gemäß irgendeinem der vorhergehenden Ansprüche, **dadurch gekennzeichnet, daß** sie in einem Gehäuse (1) untergebracht ist, das ein Fenster (45) aufweist, das gestattet, den Zustand der Schaufeln auf der Rückführungsstrecke (25) zu überprüfen.

11. Verfahren zur Aufbereitung eines Ausgangsmaterials aus Kalziumsulfat, mit dem Ziel, Gips von hoher Festigkeit zu erhalten, unter Verwendung der Anlagen gemäß irgendeinem der Ansprüche 1 bis 10, **dadurch gekennzeichnet, daß** :
   – das besagte Ausgangsmaterial zu Pulver gemahlen wird, und bei Umgebungstemperatur angefeuchtet wird, bis es einen Wassergehalt von 15 bis 30%, vorzugsweise ungefähr 15 bis 20%, bezogen auf sein Ausgangsgewicht aufweist;
   – das so angefeuchtete Material bei der Anlage in eine Aufbereitungskammer eingebracht wird, die auf eine Temperatur von ungefähr 500 bis 600°C erhitzt ist, so daß in dieser Aufbereitungskammer durch Verdampfung des in dem Pulver enthaltenen Wassers eine große Menge Wasserdampf erzeugt wird, und, gleichzeitig mit der Wirkung dieses Wasserdampfes, mit Hilfe der Schaufeln eine Mitreiß- und Vermischungsbewegung des Materials in der besagten Kammer erfolgt;
   – diese Wirkung im Verdampfungszustand nach einem ersten Anlauf der besagten Aufbereitungskammer infolge einer dauernden und kontinuierlichen späteren Vermischung des pulverförmigen Materials fortdauert, während die Temperatur zusehends abnimmt;

– die dauernde und kontinuierliche Vermischung mit einer Schub- und Mitreißwirkung und einer Dekompression des aufzubereitenden Materials gekoppelt ist, was außer der Vermischung eine direkte Wirkung des Wasserdampfes ermöglicht;

– das Material danach in zunehmendem Maße der Wirkung des trockenen Wasserdampfes unterworfen wird, und schließlich am Ausgang der Anlage als trockenes Pulver aufgefangen wird.

FIG.1

FIG. 2

FIG. 3

FIG. 5

FIG. 4A

FIG. 4B